Europäisches Patentamt

European Patent Office

Office européen des brevets

(11) Publication number: **0 216 213 B1**

# EUROPEAN PATENT SPECIFICATION

(45) Date of publication of patent specification: **07.08.91**

(51) Int. Cl.⁵: **C07C 209/90, C07C 211/46, C07C 211/47, C07C 211/51**

(21) Application number: **86112168.9**

(22) Date of filing: **03.09.86**

(54) Discoloration inhibitor for aromatic amines.

(30) Priority: **16.09.85 US 776674**

(43) Date of publication of application:
**01.04.87 Bulletin 87/14**

(45) Publication of the grant of the patent:
**07.08.91 Bulletin 91/32**

(84) Designated Contracting States:
**CH DE FR GB IT LI**

(56) References cited:
**DE-C- 1 102 168**
**DE-C- 1 121 058**
**US-A- 2 442 457**

**ULLMANS ENCYKLOPÄDIE DER TECH-
NISCHEN CHEMIE, vol. 13, 3rd edition, 1962,
Publication Urban & Schwarzenberg, Munich**

**HOUBEN-WEYL "Methoden der organischen
Chemie", vol. IV/1b, 4th edition, 1975, pages
1060-1061, Publication Georg Thieme Verlag,
Stuttgart**

**PATENT ABSTRACTS OF JAPAN, vol. 5, no.
194 (C-82)[866], 10th December 1981; & JP -**

**A - 56 115 745 (MITSUI TOATSU) 11-09-1981**

(73) Proprietor: **ETHYL CORPORATION
Ethyl Tower 451 Florida Boulevard
Baton Rouge Louisiana 70801(US)**

(72) Inventor: **Weidig, Charles Ferdinand
12348 Schlayer
Baton Rouge Louisiana 70816(US)**

(74) Representative: **Schwabe - Sandmair - Marx
Stuntzstrasse 16
W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

The present invention is related to a composition of matter consisting essentially of a major amount of certain substituted aromatic amines and a discoloration inhibiting amount of 2,6-di-tert-butyl-4-methyl phenol.

Aromatic amines which have been freshly distilled are "water white". By water white, it is meant that the aromatic amines are clear, without sediment or precipitant or bodies in suspension. It also means that they are colorless.

It has been found that aromatic amines such as alkylated anilines and alkylated aromatic diamines are subject to discoloration upon standing or exposure to air or oxygen. The normally water white substituted aromatic amines, upon standing, tend to turn to a straw or dust color and eventually will turn to a totally black color which is unsuitable for further processing of the alkylated aromatic amine. Typically, the substituted aromatic amines are used as intermediates in the preparation of polymers such as polyurethanes, insecticides, herbicides, and other products. Accordingly, there is a need to provide a composition having a stabilized color of the alkylated aromatic amines.

The incorporation of small amounts of 2,6-di-tert-butyl-4-methyl phenol is effective to inhibit the discoloration of substituted aromatic amines over a period of time which is greatly extended from the normal discoloration period found with the unprotected substituted aromatic amines.

The present invention is a composition of matter comprising a major amount by weight of a certain ring substitued aromatic amine or a mixture thereof and a discoloration inhibiting amount of 2,6-di-tert-butyl-4-methyl phenol. The substituted aromatic amines are protected against discoloration by providing a small amount of the discoloration inhibitor therein.

According to the present invention there is provided a composition of matter consisting essentially of a major amount by weight of a substituted aromatic amine selected from:

$2\text{-}C_{1-4}$-alkyl-aniline; $2,6\text{-di-}C_{1-4}$-alkylaniline; 2,4-diamino-3,5-di-ethyltoluene; 2,6-diamino-3,5-di-ethyltoluene and mixtures thereof and a minor amount by weight of 2,6-di-tert-butyl-4-methyl phenol.

The alkyl substituents of the aromatic amines of the compositions of the invention have 1 to 4 carbon atoms and include groups such as methyl, ethyl, isopropyl, sec-butyl, tert-butyl.

The substituted aromatic amines of the invention are alkylated anilines, and alkylated aromatic diamines. A first preferred class of compounds are the alkylated anilines including the following compounds:

ortho-ethylaniline;

2,6-di-ethylaniline;

2-methyl-6-ethylaniline;

A preferred sub-class are the 2,6-dialkylanilines such as 2-methyl-6-ethylaniline.

Another preferred sub- class are the ortho-alkylanilines such as ortho-ethylaniline.

Another preferred group of alkylated aromatic amines of the compositions according to the invention are the alkylated aromatic diamines

2,4-diamino-3,5-diethyltoluene

2,6-diamino-3,5-diethyltoluene;

The substituted aromatic amines are protected by incorporating therein a coloration inhibiting amount of 2,6-di-tert-butyl-4-methyl phenol.

The protective compound may be added to freshly distilled substituted aromatic amine or substituted aromatic amines which are otherwise protected from exposure to air or oxygen so as to maintain the water white color and clarity of the substituted aromatic amine.

I have found that alkylated aromatic amines with a greater degree of substitution receive a higher degree of benefit from the invention. For example 2,6-diethylaniline is better protected from discoloration than is ortho-ethylaniline.

In a preferred embodiment of the invention, the particular discoloration inhibitor is added in a small amount to the substituted aromatic amine and the substituted aromatic amine is thereafter distilled. Depending upon the respective boiling point of the discoloration inhibitor and the substituted aromatic amine, some of the inhibitor may be carried over with the amine during the distillation to provide continued protection. Also, additional discoloration inhibitor may be added to the substituted aromatic amine after it has been distilled in the presence of the discoloration inhibitor.

The discoloration or color degradation protected against is the slow gradual deterioration of the water white color normally found in pure substituted aromatic amine rather than, for example, that discoloration caused by sudden combustion or strong chemical reaction. Of course, the discoloration inhibitor is effective whether such conditions exist or the substituted aromatic amine is merely subject to extended storage or exposure to air.

The alkylated aromatic amines are considered to be of high purity when they are substantially unmixed with other substances although they may be mixed with each other. High purity alkylated aromatic amines are water white (especially after distillation) or nearly so, such as a light tan or straw color. Incorporation of the inhibitor of the invention is helpful with an alkylated aromatic amine at any color stage. That is, while the inhibitor will inhibit a water white sample from turning light yellow, it will also inhibit a yellow sample from turning orange or dark red.

The discoloration inhibitor of the invention is 2,6-di-tert-butyl-4-methyl phenol.

A broad range of amount of discoloration inhibiting compound is usable in the substituted aromatic amines subject to protection according to the invention. The range includes an amount small enough to provide some protection to the substituted aromatic amine but not so large as to inhibit or otherwise interfere with the intended use of the substituted aromatic amine. A useful range for the inhibitor is 0.001 weight percent of the substituted aromatic amine to 5.0 weight percent of the substituted aromatic amine. A more preferred range is 0.01 to 2.0 weight percent. A still more preferred range for the amount of discoloration inhibiting compound is 0.01 to 0.2 weight percent based on the weight of said amine.

The solubility of the discoloration inhibiting compound in the substituted aromatic amines of the invention varies with the substituted aromatic amine and additive discoloration inhibitor. For example, 2,6-di-tert-butyl-4-methylphenol is about 40% by weight soluble in 2-methyl-6-ethylaniline. Other additives in other substituted aromatic amines may vary somewhat from this combination. Generally, the discoloration inhibitors are at least about 40 weight percent soluble in the substituted aromatic amines of the invention. It may be desirable in some cases to heat the substituted aromatic amine somewhat in order to dissolve the discoloration inhibiting phenol in the substituted aromatic amine.

Numerous experiments have served to confirm the utility and workability of the invention. Typically, water white (clear and colorless) 2-methyl-6-ethylaniline was obtained by distillation. In the absence of an inhibitor, color bodies tend to develop rapidly, usually within one week. The addition of about 0.1 weight percent 2,6-di-tert-butyl-4-methylphenol ("butylated hydroxy toluene", or "BHT") to the water white 2-methyl-6-ethylaniline was found to be very effective in preventing color formation. In one example, the 2-methyl-6-ethyl-aniline protected with 0.108% BHT was still clear and colorless, that is water white, after six months. Typically, an unprotected solution of 2-methyl-6-ethylaniline would begin to become off-colored or straw colored within one week. It was found that BHT was effective in preventing discoloration even at 0.01 weight percent.

A better understanding of the invention will be had by review of the following examples.

EXAMPLE 1

A large portion of 2-methyl-6-ethylaniline was distilled through an Oldershaw distillation column (20 trays) to provide water white material of more than 99.9% purity. To a 49.95 gram portion of the distilled aniline was added 0.05 grams of BHT to give a 0.1 weight percent solution. The sample, in glasswork, was placed in an oven at 50° C for 1 hour to assure dissolution of the additive. A controlled sample of the distilled aniline was similarly treated without an additive. After being in the oven for 1 hour, both samples were water white. However, after 60 weeks, the 50 gram sample containing the BHT was only light yellow in color whereas the unprotected sample was orange.

A similar study was conducted with additional 50 gram samples of freshly distilled 2-methyl-6-ethylaniline containing discoloration inhibiting portions of BHT. Four 50 gram samples containing varying amounts of BHT along with a control sample containing no BHT were stored in a closed container at room temperature and observed after extended periods of time. Similarly, four additional samples and another control sample were stored at 43° C in an air circulated oven. All of the initial samples were water white. Table I below is a summary of the observation of color in the samples after an extended period of time. The color degradation ranged from the initial water white to light yellow to orange to dark red. All of the samples were initially water white.

## TABLE I

### DISCOLORATION IN 2-METHYL-6-ETHYLANILINE

| WEIGHT PERCENT BHT | ROOM TEMPERATURE | | 43°C |
|---|---|---|---|
| | 10 WEEKS | 14 & 48 WEEKS | 10 WEEKS |
| 0.1 | light yellow | light yellow | dark red |
| 0.05 | light yellow | light yellow | orange |
| 0.0025 | light yellow | light yellow | dark red |
| 0.010 | light yellow | light yellow | orange |
| 0 | orange | orange | dark red |

The above study was repeated and similar results were obtained except that none of the samples turned dark red at 43°C. Rather, an orange color was observed. Two additional room temperature studies were conducted and the samples were observed after 9 weeks and 43 weeks with the same results reported for the room temperature portion of Table I.

EXAMPLE 2

In the same fashion as Example 1, samples of 2,6-diethylaniline were prepared and stored. In an initial test, a sample with no discoloration inhibitor turned dark red after 12 weeks storage at 43°C. Two comparison samples containing 0.1 and 0.05 weight percent BHT were only orange after 12 weeks storage at 43°C. In the same manner as in Example 1, four 50 gram samples containing varying amounts of BHT and a fifth control sample were stored at room temperature and their color was recorded after an extended period of time. The results of this study are given in Table II below.

## TABLE II

### DISCOLORATION IN 2,6-DIETHYLANILINE

| WEIGHT PERCENT BHT | ROOM TEMPERATURE | |
|---|---|---|
| | 10 WEEKS | 48 WEEKS |
| 0.1 | light yellow | light yellow |
| 0.05 | light yellow | light yellow |
| 0.025 | light yellow | orange |
| 0.010 | orange | orange |
| 0 | orange | dark red |

At the same time, five samples containing the same decreasing amounts of BHT were stored at 43°C and after 10 weeks all of the samples were observed to be orange in color.

The study of Table II above and the associated 43°C evaluation was repeated with five initially water white samples of varying amounts of BHT (including the control) and similar results were observed after 10 and 47 weeks.

EXAMPLE 3

In the same manner as Examples 1 and 2, a storage test was conducted with ortho-ethylaniline containing various amounts of BHT and comparisons were made to a control containing no BHT. The initial samples of ortho-ethylaniline were light yellow in color and the results of the study are given in Table III below.

## TABLE III

## DISCOLORATION IN ORTHO-ETHYLANILINE

| WEIGHT PERCENT BHT | ROOM TEMPERATURE | | 43°C |
|---|---|---|---|
| | 9 WEEKS | 47 WEEKS | 9 WEEKS |
| 0.1 | light yellow | orange | orange |
| 0.05 | orange | orange | orange |
| 0.025 | light yellow | orange | dark red |
| 0.010 | light yellow | orange | orange |
| 0 | dark red | dark red | dark red |

The above study was repeated with similar results as shown in Table IV below.

## TABLE IV

## DISCOLORATION IN ORTHO-ETHYLANILINE

| WEIGHT PERCENT BHT | ROOM TEMPERATURE | | 43°C |
|---|---|---|---|
| | 9 WEEKS | 47 WEEKS | 9 WEEKS |
| 0.1 | orange | orange | dark red |
| 0.05 | orange | orange | orange |
| 0.025 | orange | orange | orange |
| 0.010 | orange | orange | orange |
| 0 | orange | dark red | orange |

**Claims**

1. A composition of matter consisting essentially of a major amount by weight of a substituted aromatic amine selected from 2-$C_{1-4}$-alkylaniline; 2,6-di-$C_{1-4}$-alkylaniline; 2,4-diamino-3,5-diethyltoluene; 2,6-diamino-3,5-diethyltoluene and mixtures thereof and a discoloration-inhibiting amount of 2,6-di-tert-butyl-4-methyl phenol.

5

2. The composition as claimed in claim 1 in which said amine is 2-methyl-6-ethylaniline.

3. The composition as claimed in claim 1 in which said amine is 2,6-diethylaniline.

4. The composition as claimed in claim 1 in which said substituted aromatic amine is ortho-ethylaniline.

5. The composition as claimed in claim 1 in which said alkylated aromatic amine is selected from the group consisting of 2,4-diamino-3,5-diethyltoluene, 2,6-diamino-3,5-diethyltoluene and mixtures thereof.

**Revendications**

1. Composition comprenant essentiellement une quantité dominante, en poids, d'une amine aromatique substituée choisie entre une 2-(alkyle en $C_1$ à $C_4$)-aniline ; une 2,6-di-(alkyle en $C_1$ à $C_4$)-aniline ; le 2,4-diamino-3,5-diéthyltoluène ; le 2,6-diamino-3,5-diéthyltoluène et leurs mélanges, et une quantité, propre à inhiber un changement de coloration, de 2,6-di-tertio-butyl-4-méthylphénol.

2. Composition suivant la revendication 1, dans laquelle l'amine est la 2-méthyl-6-éthylaniline.

3. Composition suivant la revendication 1, dans laquelle l'amine est la 2,6-diéthylaniline.

4. Composition suivant la revendication 1, dans laquelle l'amine aromatique substituée est l'ortho-éthylaniline.

5. Composition suivant la revendication 1, dans laquelle l'amine aromatique alkylée est choisie dans le groupe comprenant le 2,4-diamino-3,5-diéthyltoluène, le 2,6-diamino-3,5-diéthyltoluène et leurs mélanges.

**Patentansprüche**

1. Zusammensetzung bestehend im wesentlichen aus einer größeren Menge, bezogen auf das Gewicht, eines substituierten aromatischen Amins, ausgewählt aus 2-$C_{1-4}$-Alkylanilin; 2,6-Di-$C_{1-4}$-Alkylanilin; 2,4-Diamino-3,5-Diethyltoluol; 2,6-Diamino-3,5-diethyltoluol und deren Mischungen und einer die Verfärbung inhibierenden Menge 2,6-Di-tert-Butyl-4-methylphenol.

2. Zusammensetzung nach Anspruch 1, in der das Amin 2-Methyl-6-ethylanilin ist.

3. Zusammensetzung nach Anspruch 1, in der das Amin 2,6-Diethylanilin ist.

4. Zusammensetzung nach Anspruch 1, in der das substituierte aromatische Amin ortho-Ethylanilin ist.

5. Zusammensetzung nach Anspruch 1, in der das alkylierte aromatische Amin aus der Gruppe bestehend aus 2,4-Diamino-3,5-diethyltoluol, 2,6-Diamino-3,5-diethyltoluol und deren Mischungen ausgewählt ist.